# EUROPEAN PATENT APPLICATION

(11) **EP 4 597 518 A1**
(43) Date of publication of application: **06.08.2025**
(21) Application number: 23869737.9
(22) Date of filing: 15.06.2023
(51) Int. Cl.: G21C 7/14

(54) **MOTOR LEAD SCREW TYPE CONTROL ROD DRIVING MECHANISM AND DRIVING METHOD THEREOF**

(30) Priority: 27.09.2022 CN 202211181289
(71) Applicant: Shanghai Nuclear Engineering Research & Design Institute Co., Ltd., Shanghai 200233 (CN)
(72) Inventor: BAI, Yongjun, Shanghai 200233 (CN); LIN, Shaoxuan, Shanghai 200233 (CN); LIU, Gang, Shanghai 200233 (CN); SHAO, Changlei, Shanghai 200233 (CN); CHEN, Yuqing, Shanghai 200233 (CN); LI, Chengwu, Shanghai 200233 (CN); ZHANG, Dongsheng, Shanghai 200233 (CN); LI, Lei, Shanghai 200233 (CN); SHI, Xiaochen, Shanghai 200233 (CN); TONG, Hui, Shanghai 200233 (CN)
(74) Representative: Rebbereh, Cornelia
(86) International application number: PCT/CN2023/100449
(87) International publication number: WO 2024/066488

(57) **Abstract**

Provided are a motor-leadscrew type control rod driving mechanism and a method for driving the same. Nuts are driven by using a controllable motor, rotation of the nuts is converted into linear motion of a leadscrew (22) by means of a helical transmission pair (200), the leadscrew (22) is connected to a control rod assembly (1) by means of a core rod (20), so that continuous movement and accurate positioning of the control rod assembly (1) can be achieved, and the reliability is high; in addition, integral nuts are used to drive the leadscrew (22) to always maintain correct engagement of the helical transmission pair (200), thereby avoiding the problem of too rapid wear caused by engagement deviation of separable and closeable nuts, and prolonging the service life of the driving mechanism. The helical transmission pair (200) has good impact and swing resistance, and would not be disengaged due to emergency rod dropping or refueling, so that an impact problem caused by re-engagement and connection is avoided, engagement precision and transmission stability are ensured, the wear resistance and reliability of the transmission component are improved, and the service life of the transmission component is prolonged.

## Description

### CROSS-REFERENCE TO RELATED APPLICATION

This application claims the priority of the Chinese Patent Application No. 202211181289.2, filed on September 27, 2022 and entitled "Motor-leadscrew type control rod driving mechanism and Driving method thereof", the entire contents of which are incorporated herein by reference.

### TECHNICAL FIELD

The present invention relates to the field of nuclear reaction control technology of nuclear reactors, and in particular to a motor-leadscrew type control rod driving mechanism and a method for driving the same.

### BACKGROUND

At present, types of control rod driving mechanisms used in pressurized water reactors (i.e., pressurized water moderated cooling reactors) in operation at home and abroad are mainly divided into three categories, namely, the rack-pinion type, the leadscrew-roller-nut type, and the magnetic drive stepping type. In addition, according to the location of the driving mechanism equipment in the reactor, it is divided into two arrangement types: the "built-in" type and the "external" type. The built-in type drive requires components to have higher high-temperature resistance, radiation resistance, water resistance and corrosion resistance, which brings great challenges to the material selection of the driving mechanism, the reliability of mechanism actions and the service life; and disadvantages of the external type drive are that the drive line is long, the overall height of the reactor is increased, and there is a hidden danger of rod ejection accidents.

Akademik Lomonosov is the world's first floating nuclear power plant designed by the Russian nuclear power group of Rosenergoatom. The external type control rod driving mechanism therein employes a stepper motor and a rack-pinion driving mechanism. Due to the limitation of the transmission mode, the mechanism has a complex structure and occupies too much space, which make it impossible to achieve that one control rod assembly corresponds to one control rod driving mechanism. Therefore, the control rod arrangement scheme of "one to multiple rods" is often used, which cannot adapt to the high-density arrangement requirements.

Babcock & Wilcox has designed a leadscrew-roller-nut type driving mechanism, and in the operation thereof, the emergency shutdown release of the lead screw may cause irreparable damage to the integrity of the structure of thread or lead screw. When an emergency shutdown event occurs, the nut and the lead screw are completely disengaged, and re-engagement will cause a relative position deviation, which will increase the difficulty of re-engaging the roller-nut and the lead screw and make the contact situation more complicated. In addition, for the complex detachable roller-nut, wear over time will be an inevitable problem.

The Chinese Patent Application No. 200710050738.9 provides a stepper magnetic lift type reactor control rod driving mechanism, which has the following main disadvantages: (1) the claw assembly frequently moves for millions of times, causing serious mechanical wear and affecting the service life of the control rod driving mechanism; (2) the stepper movement has a step length of 10 mm or 15.875 mm, and the position control accuracy of the control rod is poor; (3) the driving mechanism in a swinging or tilting state will cause a tendency of relative deflection of the moving armature of the claw assembly, thereby exerting harmful additional forces on the moving parts related to movement of the claw, aggravating the wear of the contact surfaces thereof, and reducing the reliability of actions of the control rod driving mechanism and the service life thereof.

The Chinese Patent Application No. 201110235575.8 provides a hybrid linear reluctance motor type control rod driving mechanism. The reliability of actions of the linear motor is greatly affected by the stability of the control system and is easily affected by external vibrations and load changes.

In summary, the existing control rod driving mechanisms for nuclear reactor cannot simultaneously meet the requirements of continuous movement, precise positioning, built-in, compact structure, high reliability and long service life.

### SUMMARY

In view of the deficiencies in the prior art, the present invention provides a motor-leadscrew type control rod driving mechanism, wherein nuts are driven by using a controllable motor, rotation of the nuts is converted into linear motion of a leadscrew by means of a helical transmission pair, the leadscrew is connected to a control rod assembly by means of a core rod, so that continuous movement and accurate positioning of the control rod assembly can be achieved, and the reliability is high; in addition, integral nuts are used to drive the leadscrew to always maintain correct engagement of the helical transmission pair, thereby avoiding the problem of too rapid wear caused by engagement deviation of separable and closeable nuts, and prolonging the service life of the driving mechanism.

A first aspect of the present invention provides a motor-leadscrew type control rod driving mechanism, including:
a driving motor which includes a motor shaft having an inner hollow structure;
a helical transmission pair which includes a leadscrew having an inner hollow structure and a first nut and a second nut both engaged with the leadscrew;
a core rod which is connected to a control rod assembly of a nuclear reactor to drive the control rod assembly to move;
a rod dropping device which includes an elastic mechanism,
wherein the first nut and the second nut are respectively fixedly connected to two ends of the motor shaft, and the leadscrew passes through the first nut, the motor shaft and the second nut in sequence from bottom to top to be fixedly connected to the rod dropping device,
the core rod passes through the inner hollow structure of the leadscrew to be clamped and fixed with the rod dropping device, so that an end of the core rod contacts and squeezes the elastic mechanism,
the motor shaft is capable of driving the first nut and the second nut to rotate, so as to drive the leadscrew to drive the rod dropping device to move along an axial direction of the motor shaft, and the rod dropping device drives the core rod to move, and
when the rod dropping device unclamps the core rod, the core rod releases the squeezing on the elastic mechanism, and the elastic mechanism bounces the core rod apart.

Furthermore, the rod dropping device further includes: a slider mechanism, which includes an armature and a sleeve shaft, the elastic mechanism being disposed on the sleeve shaft; and a clamping mechanism, which has one end fixedly connected to the sleeve shaft and another end fixedly connected to the armature, wherein the armature is capable of sliding along the sleeve shaft to drive the clamping mechanism to execute a closing action.

Furthermore, the driving motor further includes: a motor housing; a motor stator, which is installed in the motor housing; a stator shield, which seals the motor stator; a motor rotor, which is installed on the motor shaft in a sleeving manner; and a rotor shield, which seals the motor rotor, wherein under action of an alternating electromagnetic field generated by driving the motor stator, the motor rotor drives the motor shaft, the first nut and the second nut to rotate together, so as to drive the leadscrew to move along the axial direction of the motor shaft.

Furthermore, the driving motor further includes a rotary transformer which includes: a rotary transformer stator which is installed in the motor housing and sealed by the stator shield; and a rotary transformer rotor, which is installed on the motor shaft in a sleeving manner and sealed by the rotor shield.

Furthermore, the driving motor is configured to calculate a movement distance of the leadscrew according to a number of rotations of the motor rotor combined with a pitch of the helical transmission pair, while acquiring a rotation angle signal from the rotary transformer rotor to achieve closed-loop control of the position and speed of the motor rotor.

Furthermore, the motor-leadscrew type control rod driving mechanism further includes an electromagnetic mechanism, wherein the electromagnetic mechanism includes: a sleeve, which is connected to the motor housing and disposed on outside of the rod dropping device and the leadscrew in a sleeving manner; a plurality of coils, which surround outside of the sleeve; and a magnetic yoke, which surround outside of the coils, and an electromagnetic field generated by the coils when energized is capable of enveloping the rod dropping device.

Furthermore, the rod dropping device further includes a magnetic pole disposed at an end of the sleeve shaft, and the electromagnetic field generated by the coils when energized attracts the armature to move toward the magnetic pole, so that sliding of the armature achieves the closing action of the clamping mechanism.

Furthermore, a convex groove structure is provided on an outer surface of the sleeve shaft, a concave groove structure is provided on an inner surface of the sleeve, and the convex groove structure matches the concave groove structure.

Furthermore, a rod position detection sensor is provided in the sleeve, and a plurality of magnetic conductive rings are installed on the core rod at intervals, wherein an induced voltage signal is generated when the magnetic conductive rings move to the rod position detection sensor, and an actual position of the control rod assembly connected to the core rod is obtained based on the voltage signal to calibrate a position of the control rod assembly measured by the motor rotor.

Furthermore, a magnetic conductive sleeve is installed at an end of the leadscrew connected to the sleeve shaft, and when the magnetic conductive sleeve and the rod position detection sensor are positioned at the same height, the control rod assembly is in its lowest position, and the induced voltage signal generated by the rod position detection sensor at this time is allowed to be used for position calibration of the control rod assembly.

A second aspect of the present invention provides a method for driving a motor-leadscrew type control rod driving mechanism, including following steps:
providing a driving motor, a motor shaft of which is formed with an inner hollow structure;
providing a helical transmission pair including a leadscrew formed with an inner hollow structure, and a first nut and a second nut both engaged with the leadscrew;
providing a core rod to connect it to a control rod assembly of a nuclear reactor;
providing a rod dropping device including an elastic mechanism;
connecting the first nut and the second nut fixedly to two ends of the motor shaft respectively, and passing the leadscrew through the first nut, the motor shaft and the second nut in sequence from bottom to top to fixedly connect the leadscrew to the rod dropping device;
passing the core rod through the inner hollow structure of the leadscrew to be clamped and fixed with the rod dropping device, so that an end of the core rod contacts and squeezes the elastic mechanism;
energizing the driving motor, so that the motor shaft and the first nut and the second nut rotate together to drive the leadscrew to move along an axial direction of the motor shaft, and the leadscrew drives the rod dropping device and the core rod connected to the leadscrew to move together, so as to achieve position adjustment of the core rod and the control rod assembly connected thereto; and
releasing, when an action of emergency dropping of the control rod assembly is required, the clamping between the core rod and the rod dropping device, and bouncing the core rod apart by the elastic mechanism to separate the rod dropping device from the core rod, so that the core rod and the control rod assembly are dropped together.

The technical solutions of the present invention have the following beneficial effects:
In the motor-leadscrew type control rod driving mechanism and the driving method thereof of the present invention, nuts are driven by using a controllable motor, rotation of the nuts is converted into linear motion of a leadscrew by means of a helical transmission pair, the leadscrew is connected to a control rod assembly by means of a core rod, so that continuous movement and accurate positioning of the control rod assembly can be achieved, and the reliability is high; in addition, integral nuts are used to drive the leadscrew to always maintain correct engagement of the helical transmission pair, thereby avoiding the problem of too rapid wear caused by engagement deviation of separable and closeable nuts, and prolonging the service life of the driving mechanism.

The helical transmission pair of the present invention drives the leadscrew to perform linear motion through the rotation of the integral nuts. Different from the scheme in which the roller-nut needs to perform separating and closing actions, the nuts and the leadscrew always maintain a stable engagement state and have good impact and swing resistance; and at the same time, they would not be disengaged due to emergency rod dropping or refueling, so that an impact problem caused by re-engagement and connection is avoided, engagement precision and transmission stability are ensured, the wear resistance and reliability of the transmission component are improved, and the service life of the transmission component is prolonged.

The interior of the leadscrew of the present invention is hollow, in which the core rod is disposed to be connected with the control rod assembly. In this way, when the rod is to be dropped in an emergency, the core rod is quickly bounced apart by a rod dropping spring, and the control rod assembly is inserted into the reactor core under the action of gravity. Since the leadscrew does not accompany with the rod dropping action, the impact on the reactor core is reduced, and at the same time, the engagement portions of the nuts with the leadscrew are prevented from being subjected to impact.

It should be understood that the above general description and the following detailed description are exemplary only and do not limit the present application.

### BRIEF DESCRIPTION OF THE DRAWINGS

In order to more clearly illustrate the technical solutions of the embodiments of the present application, the accompanying drawings to be used in the embodiments of the present application are briefly introduced below. Obviously, the accompanying drawings described below are only the specific embodiments of the present application, and those skilled in the art can obtain other embodiments according to the following drawings without making creative effort.
FIG. 1 is a schematic structural diagram of a motor-leadscrew type control rod driving mechanism according to a specific embodiment of the present invention;
FIG. 2 is a schematic structural diagram in which a rod dropping device is in a rodgrasping state according to a specific embodiment of the present invention;
FIG. 3 is a schematic structural diagram in which the rod dropping device is in a roddropping state according to a specific embodiment of the present invention; and
FIG. 4 is a schematic diagram of the cooperation between a sleeve and a sleeve shaft according to a specific embodiment of the present invention.

### Reference numerals:

1- Control rod assembly, 2- Bearing end cap, 3- First bearing, 4- First nut, 5- Motor housing, 6- Motor stator, 7- Stator shield, 8- Rotor shield, 9- Motor rotor, 10- Rotary transformer stator, 11- Rotary transformer rotor, 12- Motor shaft, 13- Connecting screw, 14 - Second bearing, 15-Second nut, 16- Rod position detection sensor, 17- Sleeve, 18- Magnetic yoke, 19- Coil, 20-Core rod, 21- Magnetic conductive ring, 22- Leadscrew, 23- End cap, 24- Magnetic pole, 25-Rod dropping spring, 26- Reset spring, 27- Armature, 28- Claw, 29- Connecting rod, 30- Sleeve shaft, 31- Magnetic conductive sleeve, 32- Convex groove structure, 33- Concave groove structure, 34- Clamping slot, 100- Driving motor, 101- Rotary transformer; 200- Helical transmission pair, 300- Rod dropping device, 301- Elastic mechanism, 302- Slider mechanism, 303- Clamping mechanism, 400- Electromagnetic mechanism.

The accompanying drawings, which are incorporated in and constitute part of Description, illustrate embodiments consistent with the present application and together with Description serve to explain the principles of the present application.

### DETAILED DESCRIPTION

In order to better understand the technical solutions of the present application, the embodiments of the present application will be described in detail below in conjunction with the accompanying drawings.

It should be clear that the described embodiments are only a part of the embodiments of the present application, rather than all embodiments. Based on the embodiments in the present application, all other embodiments obtained by those of ordinary skill in the art without making creative work belong to the scope of protection of the present application.

In view of the deficiencies in the prior art, the present invention proposes a motor-leadscrew type control rod driving mechanism, which can achieve continuous movement and accurate positioning of the control rod assembly, and the reliability is high.

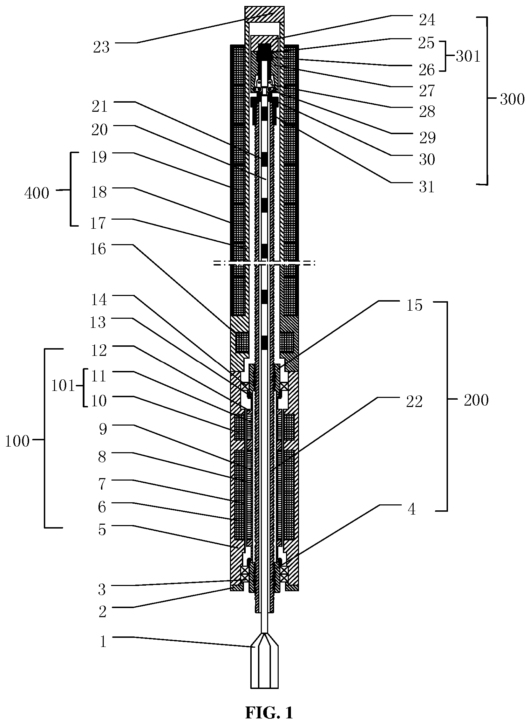

FIG. 1 is a schematic structural diagram of a motor-leadscrew type control rod driving mechanism according to a specific embodiment of the present invention.

As shown in FIG. 1, the motor-leadscrew type control rod driving mechanism according to the present invention includes: a driving motor 100, a helical transmission pair 200, a core rod 20 and a rod dropping device 300.

The driving motor 100 is a power mechanism of the motor-leadscrew type control rod driving mechanism, and includes a motor shaft 12 having an inner hollow structure.

The helical transmission pair 200 is a transmission mechanism of the motor-leadscrew type control rod driving mechanism for achieving the movement of internal components of the mechanism, and includes a leadscrew 22 having an inner hollow structure, and a first nut 4 and a second nut 15 both engaged with the leadscrew 22. The first nut 4 and the second nut 15 are respectively fixedly connected to two ends of the motor shaft 12. Specifically, the first nut 4 and the second nut 15 may be fixed to the two ends of the motor shaft 12 by the connecting screws 13.

The leadscrew 22 passes through the first nut 4, the motor shaft 12 and the second nut 15 in sequence from bottom to top, is engaged with the first nut 4 and the second nut 15 at two ends of the motor shaft 12, and is fixedly connected to the rod dropping device 300. The motor shaft 12 rotates, so that the first nut 4 and the second nut 15 rotate together to drive the leadscrew 22 to move axially.

In the conventional separable and closeable nut-leadscrew transmission, the nuts are structurally able to perform separating and closing actions. When separated, the nut and the screw are no longer in engaging contact; and when closed, the nut and the screw are in engaging contact and perform a helical transmission action. In the present application, the first nut 4 and the second nut 15 always remain in engagement with the leadscrew 22 to form an integral structure, thereby avoiding the problem of too rapid wear of the separable and closeable nut due to engagement deviation, and improving the service life of the driving mechanism.

The driving motor 100 further includes a motor housing 5. The outer circumferences of the first nut 4 and the second nut 15 are supported in the motor housing 5 by the first bearing 3 and the second bearing 14, respectively. Specifically, the first bearing 3 is installed in a fixed support form, and the second bearing 14 is installed in a floating support form. The first bearing 3 is axially positioned by the bearing end cap 2. The connection between the nut and the bearing is a detachable connection, and the connection between the motor housing 5 and each of the first bearing 3 and the second bearing 14 is also a detachable connection.

The core rod 20 is connected to the control rod assembly 1 of the nuclear reactor to drive the control rod assembly 1 to move.

The rod dropping device 300 includes an elastic mechanism 301. The core rod 20 passes through the inner hollow structure of the leadscrew 22 and is clamped and fixed with the rod dropping device 300, so that one end of the core rod 20 contacts and squeezes the elastic mechanism 301. The motor shaft 12 can drive the first nut 4 and the second nut 15 to rotate, so that the leadscrew 22 drives the rod dropping device 300 to move along the axial direction of the motor shaft 22, and the rod dropping device 300 drives the core rod 20 to move. When the motor shaft 12 drives the leadscrew 22 to move in a direction away from the nuclear reactor core, the rod dropping device 300 drives the core rod 20 and the control rod assembly 1 to ascend away from the nuclear reactor core; and when the motor shaft 12 drives the leadscrew 22 to move in a direction close to the nuclear reactor core, the rod dropping device 300 drives the core rod 20 and the control rod assembly 1 to descend close to the nuclear reactor core, thereby achieving the up and down movement of the control rod assembly 1. When the control rod assembly 1 needs to be dropped urgently, the rod dropping device 300 unclamps the core rod 20 to release the squeezing on the elastic mechanism 301, and the core rod 20 is bounced apart, so that the core rod 20 drives the control rod assembly 1 to descend rapidly, thereby achieving the emergency dropping of the control rod assembly 1.

The driving motor 100 is implemented as a controllable motor, and the rotation of the first nut 4 and the second nut 15 is converted into the linear motion of the leadscrew 22 through the helical transmission pair. The leadscrew 22 is connected to the control rod assembly 1 through the core rod 20, so that continuous movement and accurate positioning of the control rod assembly 1 can be achieved, and the reliability is high; in addition, an integral structure in which the first nut 4 and the second nut 15 always remain in engagement with the leadscrew 22 is adopted to always maintain correct engagement of the helical transmission pair, thereby avoiding the problem of too rapid wear caused by engagement deviation of separable and closeable nuts, and prolonging the service life of the driving mechanism.

The helical transmission pair 200 rotationally drives the leadscrew 22 to perform linear motion through the integral structure of the first nut 4, the second nut 15 and the leadscrew 22. Different from the scheme in which the separable and closeable nuts need to perform separating and closing actions, the first nut 4, the second nut 15 and the leadscrew 22 always maintain a stable engagement state and have good impact and swing resistance; and at the same time, they would not be disengaged due to emergency rod dropping or refueling, so that an impact problem caused by re-engagement and connection is avoided, engagement precision and transmission stability are ensured, the wear resistance and reliability of the transmission component are improved, and the service life of the transmission component is prolonged.

The interior of the leadscrew 22 is hollow, and the core rod 20 is disposed inside the leadscrew 22 and is connected to the control rod assembly 1. In this way, when the control rod assembly 1 is to be urgently dropped, the core rod 20 is quickly bounced apart by the elastic mechanism 301, and the control rod assembly 1 is inserted into the nuclear reactor core under the action of gravity. Since the leadscrew 22 does not accompany the rod dropping action, the impact on the reactor core is reduced, and at the same time, the engagement portions of the first nut 4 and the second nut 15 with the leadscrew 22 are prevented from being subjected to impact.

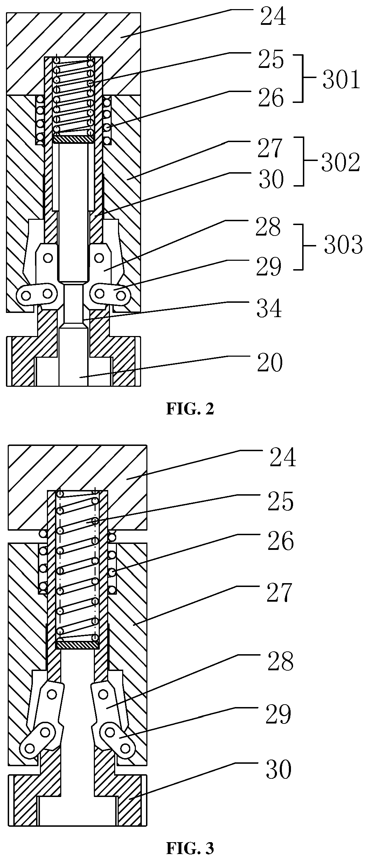

FIG. 2 is a schematic structural diagram in which a rod dropping device is in a rodgrasping state according to a specific embodiment of the present invention.

As shown in FIG. 2, the rod dropping device 300 further includes a slider mechanism 302 and a clamping mechanism 303. The slider mechanism 302 includes an armature 27 and a sleeve shaft 30. The elastic mechanism 301 is disposed on the sleeve shaft 30. One end of the clamping mechanism 303 is fixedly connected to the sleeve shaft 30, and the other end thereof is fixedly connected to the armature 27. The armature 27 can slide along the sleeve shaft 30 to drive the clamping mechanism 303 to perform a closing action.

In a specific embodiment, the clamping mechanism 303 includes a claw 28 and a connecting rod 29. The bottom of the armature 27 is hinged to one end of the connecting rod 29, the other end of the connecting rod 29 is hinged to the claw 28, and the other end of the claw 28 is hinged to the sleeve shaft 30. In this embodiment, the hinge is achieved by a pin connection. The core rod 20 passes through the inside of the leadscrew 22 and enters the inside of the sleeve shaft 30. The side wall of one end of the core rod passing through the sleeve shaft 30 is provided with a clamping slot 34 that engages with the claw 28. The claw 28 can be clamped into the clamping slot 34 and unclamped from the clamping slot 34 to achieve the engagement and separation between the claw 28 and the core rod 20. The number of each of the above-mentioned claw 28 and connecting rod 29 is at least 2, and they are evenly arranged along the circumference of the sleeve shaft 30.

As shown in FIG. 2, in some embodiments, the elastic mechanism 301 includes a rod dropping spring 25 and a reset spring 26. The rod dropping spring 25 is disposed inside the sleeve shaft 30 and abuts against the core rod 20. The reset spring 26 is disposed on the outside of the sleeve shaft 30 in a sleeving manner and abuts against the armature 27.

The core rod 20 squeezes the rod dropping spring 25, so that the rod dropping spring 25 is in a compressed state. The claw 28 is closed to engage with the core rod 20 through the clamping slot 34 on the core rod 20. At this time, the core rod 20 is connected to the rod dropping device 300 and the leadscrew 22, and the core rod 20 moves as the leadscrew 22 moves up and down.

FIG. 3 is a schematic structural diagram in which the rod dropping device is in a roddropping state according to a specific embodiment of the present invention.

As shown in FIG. 3, when the control rod assembly 1 needs to be urgently dropped, the reset spring 26 which was always in a compressed state bounces apart the armature 27, and pushes the connecting rod 29 to achieve the opening action of the claw 28. At this time, the claw 28 is separated from the core rod 20, and the reset release of the rod dropping spring 25 accelerates the ejection of the core rod 20.

When the control rod assembly 1 is to be urgently dropped, the core rod 20 is quickly bounced apart by the rod dropping spring 25, and the control rod assembly 1 is inserted into the reactor core under the action of gravity. Since the leadscrew 22 does not accompany with the rod dropping action, the impact on the reactor core is reduced, and at the same time, the engagement portions of the first nut 4 and the second nut 15 with the leadscrew 22 are prevented from being subjected to impact. In addition, the rod dropping spring 25 compressed inside the rod dropping device 300 is used as an energy storage component, so that the emergency dropping of the control rod assembly 1 under any working condition can be achieved. At the same time, the rod dropping spring 25 is always in a static compression state, and the spring compression height will not change due to the change in the position of the control rod assembly 1, thereby avoiding fatigue damage caused by alternating stress.

Please continue to refer to FIG. 1. In some embodiments, the driving motor 100 further includes a motor stator 6, a motor rotor 9, a stator shield 7, a rotor shield 8 and a motor housing 5. The driving motor 100 is designed with a shield type controllable motor structure, and the winding on the motor stator 6, that is, the stator winding, is implemented with an insulation structure that is resistant to high temperature and high radiation. The motor stator 6 is installed in the motor housing 5, and the stator shield 7 seals the motor stator 6. The motor rotor 9 is installed on the motor shaft 12 in a sleeving manner, and the rotor shield 8 seals the motor rotor 9. Under the action of the alternating electromagnetic field generated by driving the motor stator 6, the motor rotor 9 drives the motor shaft 12, the first nut 4 and the second nut 15 to rotate together, so as to drive the leadscrew 22 to move along the axial direction of the motor shaft 12.

The driving motor 100 is designed with a shield type motor structure, and the stator shield 7 and the rotor shield 8 are used to isolate the motor stator 6 and the motor rotor 9 from the primary loop coolant respectively, with good sealing property and high safety. At the same time, the design technology of an insulation structure with high temperature resistance and high radiation resistance is applied, which can meet the requirement of long-term operation under the conditions of a high temperature water environment of 300°C and a cumulative radiation dose of 10⁷ Gy.

In some embodiments, the driving motor 100 further includes a rotary transformer 101, and the rotary transformer 101 includes a rotary transformer stator 10 and a rotary transformer rotor 11. The rotary transformer stator 10 is installed in the motor housing 5 and is sealed by the stator shield 7. The rotary transformer rotor 11 is installed on the motor shaft 12 in a sleeving manner and is sealed by the rotor shield 8.

Further, the driving motor 100 acquires the rotation angle signal from the rotary transformer rotor 11 and feeds it back to the control input, so as to achieve the closed-loop control on the position and speed of the motor rotor 9. At the same time, according to the number of rotations of the motor rotor 9 combined with the pitch of the helical transmission pair 200, the movement distance of the leadscrew 22 is calculated, and then the position signal of the control rod assembly 1 is obtained.

The rotary transformer 101 can be used to accurately detect the instantaneous position, instantaneous rotation speed and rotation direction of the driving motor rotor 9, and make the structure of the driving motor 100 more compact and the manufacturing cost thereof lower.

Please continue to refer to FIG. 1. The motor-leadscrew type control rod driving mechanism according to the present invention further includes an electromagnetic mechanism 400. The electromagnetic mechanism 400 includes a sleeve 17, a plurality of coils 19 and a magnetic yoke 18. The sleeve 17 is a cylindrical shell with a hollow interior. The sleeve 17 is connected to the motor housing 5 and is provided with an end cap 23 on top. The sleeve 17 is installed on the outside of the rod dropping device 300 and the leadscrew 22 in a sleeving manner. The coil 19 surrounds the outside of the sleeve 17, and the outside of the coil 19 is surrounded by the magnetic yoke 18.

The rod dropping device 300 is disposed inside the sleeve 17 and is able to slide inside the sleeve 17. The rod dropping device 300 is affected by the coils 19 outside the sleeve 17. Specifically, when several adjacent working coils 19 are energized, the positions of these working coils 19 are near the height of the rod dropping device 300, and the electromagnetic field generated by these coils 19 can envelope the rod dropping device 300.

In some specific embodiments, the rod dropping device 300 further includes a magnetic pole 24 disposed at the end of the sleeve shaft 30. When the coils 19 are energized, the electromagnetic field generated attracts the armature 27 to move toward the magnetic pole 24, and the armature 27 slides to achieve the closing action of the clamping mechanism 303.

One end of the sleeve shaft 30 is embedded in and connected to the magnetic pole 24. The magnetic pole 24 is made of a magnetic conductive material. The interior of the sleeve shaft 30 is hollow. A rod dropping spring 25 is provided at the top of the sleeve shaft 30. An armature 27 is provided below the magnetic pole 24. The armature 27 is made of a magnetic conductive material and is slidably mounted on the sleeve shaft 30 in a sleeving manner to perform the function of a slider. On the outside of the sleeve shaft 30, the magnetic pole 24 is connected to the armature 27 through a reset spring 26. A plurality of magnetic conductive rings 21 are installed on the core rod 20 at intervals. The upper end of the core rod 20 passing through the leadscrew 22 enters the sleeve shaft 30 of the rod dropping device 300 and directly contacts the rod dropping spring 25, and the lower end of the core rod 20 is connected to the control rod assembly 1.

A number of adjacent coils 19 are energized, and the positions of these energized coils 19 are near the height of the rod dropping device 300, so that the electromagnetic field generated by them can envelop the rod dropping device 300 to drive the armature 27 to slide, so as to achieve the opening action and closing action of the claw 28. This technology reduces the power consumption of the coils 19, reduces the heat generated by the coils 19, and increases the service life of the coils 19. Specifically, as shown in FIGS. 2 and 3, when the coils 19 are energized, the electromagnetic field generated by the coils 19 attracts the armature 27 to move toward the magnetic pole 24, and the armature 27 slides and pushes the connecting rod 29 to achieve the closing action of the claw 28. At this time, the rod dropping spring 25 is in direct contact with the core rod 20, and the core rod 20 squeezes the rod dropping spring 25. In this way, the rod dropping spring 25 is in a compressed state, and the claw 28 is closed to engage with the core rod 20 through the clamping slot 34 on the core rod 20. At this time, the core rod 20 is connected to the rod dropping device 300 and the leadscrew 22. In result, the core rod 20 moves as the leadscrew 22 moves up and down to achieve the position adjustment of the control rod assembly 1 connected to the core rod 20.

When the emergency rod dropping action is executed, the coils 19 are powered off, the electromagnetic field disappears, and the reset spring 26 which was always in a compressed state bounces apart the armature 27, so as to push the connecting rod 29 to achieve the opening action of the claw 28. At this time, the claw 28 is separated from the core rod 20, and the reset release of the rod dropping spring 25 accelerates the ejection of the core rod 20, and the core rod 20 and the control rod assembly 1 fall together.

In some embodiments, the rod dropping device 300 is provided with an anti-rotation structure, which prevents the leadscrew 22 from rotating. Specifically, this structure can be achieved by the cooperation between the sleeve 17 and the sleeve shaft 30.

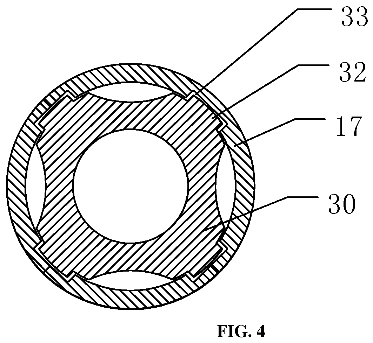

FIG. 4 is a schematic diagram of the cooperation between a sleeve and a sleeve shaft according to a specific embodiment of the present invention.

As shown in FIG. 4, in a specific embodiment, the anti-rotation structure is specifically configured as a convex groove structure 32 provided on the outer surface of the sleeve shaft 30, and a concave groove structure 33 provided on the inner surface of the sleeve 17, and the convex groove structure 32 cooperates with the concave groove structure 33. The cooperation between the concave groove structure 33 and the convex groove structure 32 can prevent the leadscrew 22 connected to the sleeve shaft 30 from rotating on the one hand, and can achieve radial positioning in the length direction of the leadscrew 22 on the other hand.

Due to the need to maintain water flow inside the sleeve 17, while the clearance between the inner side of the sleeve 17 and each of the rod dropping device 300 and the anti-rotation structure is relatively small, a flow channel is formed on the magnetic pole 24, the armature 27 and the sleeve shaft 30 of the rod dropping device 300. The flow channel is consistent with the direction of the water flow and plays a role in guiding the water flow.

By providing an anti-rotation structure on the rod dropping device 300 connected to the upper end of the leadscrew 22, the coaxiality of the leadscrew 22 with the axes of the first nut 4 and the second nut 15 is ensured, and the tilting and squeezing phenomenon in the helical pair is avoided. At the same time, the radial positioning in the length direction of the leadscrew 22 can ensure that the leadscrew 22 will not shake in the case of swinging, so as to avoid colliding with the sleeve 17.

Please continue to refer to FIG. 1. A rod position detection sensor 16 is provided in the sleeve 17. A plurality of magnetic conductive rings 21 are installed on the core rod 22 at intervals. When the magnetic conductive ring 21 moves to a position corresponding to the rod position detection sensor 16, an induced voltage signal is generated. Based on the voltage signal, the actual position of the control rod assembly 1 connected to the core rod 22 is obtained, and at the same time, the actual position is used to calibrate the position of the control rod assembly 1 measured by the motor rotor 9.

In some embodiments, a magnetic conductive sleeve 31 is installed at one end of the leadscrew 22 connected to the sleeve shaft 30. When the magnetic conductive sleeve 31 and the rod position detection sensor 16 are at the same height, the control rod assembly 1 is at its lowest position. At this time, the induced voltage signal generated by the rod position detection sensor 16 can be used for the position calibration of the control rod assembly 1.

High-precision position and speed control can be achieved through the above-mentioned controllable driving motor 100. The rod position control is implemented by using a semi-closed loop servo system that monitors the rotation angle of the motor rotor 9, and at the same time the rod position detection sensor 16 is used to directly measure and calibrate the rod position, so as to form the integrated control of the driving motor 100 and the coils 19, thereby achieving continuous movement and precise positioning of the control rod assembly 1.

The motor-leadscrew type control rod driving mechanism according to the present invention can be installed in two ways: being installed inside a pressure vessel, or being installed outside the pressure vessel. When being installed outside the pressure vessel, the motor housing 5, the sleeve 17 and the end cap 23 may be connected by threads or welding to form a sealed pressure-bearing housing; and when being installed inside the pressure vessel, the motor housing 5 and the sleeve 17 are connected while the end cap 23 is removed, which is conducive to reducing the flow resistance of the primary loop.

A second aspect of the present invention provides a method for driving a motor-leadscrew type control rod driving mechanism, which includes the following steps of:
providing a driving motor 100, a motor shaft 12 of which being formed with an inner hollow structure;
providing a helical transmission pair including a leadscrew 22 formed with an inner hollow structure, and a first nut 4 and a second nut 15 both engaged with the leadscrew 22;
providing a core rod 20 to connect it to a control rod assembly 1 of a nuclear reactor;
providing a rod dropping device 300 including an elastic mechanism 301;
connecting the first nut 4 and the second nut 15 fixedly to two ends of the motor shaft 12 respectively, and passing the leadscrew 22 through the first nut 4, the motor shaft 12 and the second nut 15 in sequence from bottom to top to fixedly connect the leadscrew 22 to the rod dropping device 300;
passing the core rod 20 through the inner hollow structure of the leadscrew to be clamped and fixed with the rod dropping device 300, so that an end of the core rod 20 contacts and squeezes the elastic mechanism 301;
energizing the driving motor 100, so that the motor shaft 12 and the first nut 4 and the second nut 15 rotate together to drive the leadscrew 22 to move along an axial direction of the motor shaft 12, and the leadscrew 22 drives the rod dropping device 300 and the core rod 20 connected to the leadscrew 22 to move together, so as to achieve position adjustment of the core rod 20 and the control rod assembly 1 connected thereto; and
releasing, when an action of emergency dropping of the control rod assembly 1 is required, the clamping between the core rod 20 and the rod dropping device 300, and bouncing the core rod 20 apart by the elastic mechanism 301 to separate the rod dropping device 300 from the core rod 20, so that the core rod 20 and the control rod assembly 1 are dropped together.

The above driving method can not only achieve the continuous movement and accurate positioning of the control rod assembly 1 with high reliability, but also keep the correct engagement of the helical transmission pair 200 during the above movement, thus avoiding the problem of too rapid wear caused by relative position deviation due to multiple re-engagements, and improving the service life of the driving mechanism.

The above are only preferred embodiments of the application, and are not intended to limit the present application. For those skilled in the art, the present application may have various modifications and changes. Any modifications, equivalent replacements, improvements, etc. made within the spirit and principles of this application shall be included within the protection scope of this application.

## Claims

1. A motor-leadscrew type control rod driving mechanism, comprising:
a driving motor which comprises a motor shaft having an inner hollow structure;
a helical transmission pair which comprises a leadscrew having an inner hollow structure and a first nut and a second nut both engaged with the leadscrew;
a core rod which is connected to a control rod assembly of a nuclear reactor to drive the control rod assembly to move;
a rod dropping device which comprises an elastic mechanism,
wherein the first nut and the second nut are respectively fixedly connected to two ends of the motor shaft, and the leadscrew passes through the first nut, the motor shaft and the second nut in sequence from bottom to top to be fixedly connected to the rod dropping device,
the core rod passes through the inner hollow structure of the leadscrew to be clamped and fixed with the rod dropping device, so that an end of the core rod contacts and squeezes the elastic mechanism,
the motor shaft is capable of driving the first nut and the second nut to rotate, so as to drive the leadscrew to drive the rod dropping device to move along an axial direction of the motor shaft, and the rod dropping device drives the core rod to move, and
when the rod dropping device unclamps the core rod, the core rod releases the squeezing on the elastic mechanism, and the elastic mechanism bounces the core rod apart.

2. The motor-leadscrew type control rod driving mechanism according to claim 1, wherein the rod dropping device further comprises: a slider mechanism which comprises an armature and a sleeve shaft, the elastic mechanism being disposed on the sleeve shaft; and a clamping mechanism which has one end fixedly connected to the sleeve shaft and another end fixedly connected to the armature, wherein the armature is capable of sliding along the sleeve shaft to drive the clamping mechanism to execute a closing action.

3. The motor-leadscrew type control rod driving mechanism according to claim 2, wherein the driving motor further comprises: a motor housing; a motor stator which is installed in the motor housing; a stator shield which seals the motor stator; a motor rotor which is installed on the motor shaft in a sleeving manner; and a rotor shield which seals the motor rotor, wherein under action of an alternating electromagnetic field generated by driving the motor stator, the motor rotor drives the motor shaft, the first nut and the second nut to rotate together, so as to drive the leadscrew to move along the axial direction of the motor shaft.

4. The motor-leadscrew type control rod driving mechanism according to claim 3, wherein the driving motor further comprises a rotary transformer which comprises: a rotary transformer stator which is installed in the motor housing and sealed by the stator shield; and a rotary transformer rotor which is installed on the motor shaft in a sleeving manner and sealed by the rotor shield.

5. The motor-leadscrew type control rod driving mechanism according to claim 4, wherein the driving motor is configured to calculate a movement distance of the leadscrew according to a number of rotations of the motor rotor combined with a pitch of the helical transmission pair, while acquiring a rotation angle signal from the rotary transformer rotor to achieve closed-loop control of position and speed of the motor rotor.

6. The motor-leadscrew type control rod driving mechanism according to claim 5, further comprising an electromagnetic mechanism, wherein the electromagnetic mechanism comprises: a sleeve which is connected to the motor housing and disposed on outside of the rod dropping device and the leadscrew in a sleeving manner; a plurality of coils which surround outside of the sleeve; and a magnetic yoke which surround outside of the coils, and an electromagnetic field generated by the coils when energized is capable of enveloping the rod dropping device.

7. The motor-leadscrew type control rod driving mechanism according to claim 6, wherein the rod dropping device further comprises a magnetic pole disposed at an end of the sleeve shaft, and the electromagnetic field generated by the coils when energized attracts the armature to move toward the magnetic pole, so that sliding of the armature achieves the closing action of the clamping mechanism.

8. The motor-leadscrew type control rod driving mechanism according to claim 7, wherein a convex groove structure is provided on an outer surface of the sleeve shaft, a concave groove structure is provided on an inner surface of the sleeve, and the convex groove structure matches the concave groove structure.

9. The motor-leadscrew type control rod driving mechanism according to claim 8, wherein a rod position detection sensor is provided in the sleeve, and a plurality of magnetic conductive rings are installed on the core rod at intervals, and wherein an induced voltage signal is generated when the magnetic conductive rings move to the rod position detection sensor, and an actual position of the control rod assembly connected to the core rod is obtained based on the voltage signal to calibrate a position of the control rod assembly measured by the motor rotor.

10. The motor-leadscrew type control rod driving mechanism according to claim 9, wherein a magnetic conductive sleeve is installed at an end of the leadscrew connected with the sleeve shaft, and when the magnetic conductive sleeve and the rod position detection sensor are positioned at the same height, the control rod assembly is in its lowest position, and the induced voltage signal generated by the rod position detection sensor at this time is allowed to be used for position calibration of the control rod assembly.

11. A method for driving a motor-leadscrew type control rod driving mechanism, comprising following steps:
providing a driving motor, a motor shaft of which is formed with an inner hollow structure;
providing a helical transmission pair comprising a leadscrew formed with an inner hollow structure, and a first nut and a second nut both engaged with the leadscrew;
providing a core rod to connect it to a control rod assembly of a nuclear reactor;
providing a rod dropping device comprising an elastic mechanism;
connecting the first nut and the second nut fixedly to two ends of the motor shaft respectively, and passing the leadscrew through the first nut, the motor shaft and the second nut in sequence from bottom to top to fixedly connect the leadscrew to the rod dropping device;
passing the core rod through the inner hollow structure of the leadscrew to be clamped and fixed with the rod dropping device, so that an end of the core rod contacts and squeezes the elastic mechanism;
energizing the driving motor, so that the motor shaft and the first nut and the second nut rotate together to drive the leadscrew to move along an axial direction of the motor shaft, and the leadscrew drives the rod dropping device and the core rod connected to the leadscrew to move together, so as to achieve position adjustment of the core rod and the control rod assembly connected thereto; and
releasing, when an action of emergency dropping of the control rod assembly is required, the clamping between the core rod and the rod dropping device, and bouncing the core rod apart by the elastic mechanism to separate the rod dropping device from the core rod, so that the core rod and the control rod assembly are dropped together.
